# EUROPEAN PATENT APPLICATION

(11) **EP 3 597 403 A1**
(43) Date of publication of application: **22.01.2020**
(21) Application number: 18767357.9
(22) Date of filing: 27.02.2018
(51) Int. Cl.: B29C 64/245, B29C 64/321, B32B 27/00, B33Y 30/00

(54) **SHAPING MAT**

(30) Priority: 17.03.2017 JP 2017053615
(71) Applicant: Nitto Denko Corporation, Ibaraki-shi, Osaka 567-8680 (JP)
(72) Inventor: OGINO, Yoshiko, Ibaraki-shi Osaka 567-8680 (JP); MATSUSHITA, Kiichiro, Ibaraki-shi Osaka 567-8680 (JP); MURATA, Akihisa, Ibaraki-shi Osaka 567-8680 (JP); KITAHARA, Tsunaki, Ibaraki-shi Osaka 567-8680 (JP); NONAKA, Akiko, Ibaraki-shi Osaka 567-8680 (JP)
(74) Representative: Grünecker Patent- und Rechtsanwälte PartG mbB
(86) International application number: PCT/JP2018/007187
(87) International publication number: WO 2018/168441

(57) **Abstract**

Provided is a build mat to which a 3D print sticks well and from which the 3D print is easily separated. The build mat provided by this invention comprises a substrate and a surface layer provided to the first face of the substrate. The build mat has a peel strength of 1.5 N/18mm or greater and 10 N/18mm or less, determined by peeling the mat from polylactic acid (PLA) placed on the surface layer; and it is constituted so that the surface layer remains on the PLA in the peel strength measurement.

## Description

### [Technical Field]

The present invention relates to a build mat, for instance, a build mat placed on the build stage of a 3D printer in 3D printing an object using the printer. This application claims priority to Japanese Patent Application No. 2017-53615 filed on March 17, 2017; and the entire content thereof is herein incorporated by reference.

### [Background Art]

Recent years have seen development of 3D printers (lamination molding devices). A 3D printer has a build stage on which a three-dimensional object (a 3D print) is formed. With the 3D printer, the object is formed on such a build stage by means of additive manufacturing, such as fused deposition modeling (FDM), inkjet printing, stereolithography, powder sintering and powder fixing. For instance, Patent Documents 1 to 4 describe such 3D printers.

### [Citation List]

### [Patent Literature]

[Patent Document 1] Japanese Patent Application Publication No. H9-24552
[Patent Document 2] Japanese Patent Application Publication No. 2011-101834
[Patent Document 3] Japanese Patent Application Publication No. 2015-212042
[Patent Document 4] Japanese Patent Application Publication No. 2016-5869

### [Summary of Invention]

### [Technical Problem]

Depending on 3D printing methods used in 3D printers, objects (3D prints) may get stuck to the build stage surface in the middle of its formation during the process of 3D printing on the build stage. In such a case, after completion of object formation on the build stage, the resulting object needs to be removed from the build stage. In doing so, a tool such as a sharp-edged scraper is often pushed in between the build stage and the resulting object stuck to the surface in order to separate the two. However, in such a method, a relatively large force is often exerted on the printed object through the tool such as a sharp-edged scraper; and therefore, the tool is likely to cause damage and breakage to the object.

As a way of facilitating the separation of objects from a 3D printer, the top face (build surface) of the build stage may be covered with a material having high releasing properties to 3D printing resins (molding resins). However, with increasing releasing properties to a 3D printing resin, the sticking properties of the melted resin tend to decrease. When the melted resin has insufficient sticking properties to the build surface, the bottom of an object does not sufficiently stick to the build surface. This will lead to a problem leading to deterioration of shape accuracy, for instance, the object partially lifting up from the build surface in the middle of its formation, etc.

An objective of the present invention is thus to provide a build mat to which a 3D print sticks well and from which the 3D print is easily separated.

### [Solution to Problem]

The build mat provided by this description comprises a substrate and a surface layer provided to one (first) face of the substrate. The build mat has a peel strength of 1.5 N/18mm or greater and 10 N/18mm or less, determined by peeling the mat from polylactic acid (PLA) placed on the surface layer. The build mat is constituted so that the surface layer remains on the PLA in the peel strength measurement. Such a build mat can favorably bring about both good resin adhesion and easy object separation from the build mat.

In some embodiments, a paper substrate can be preferably used as the substrate. The build mat having the surface layer on a paper substrate can favorably bring about a form of separation that leaves the surface layer on the PLA.

In some embodiments, the surface layer may comprise a fixing agent having an amide group. The build mat disclosed herein can be made in an embodiment having a surface layer that comprises such a fixing agent. As the fixing agent, for instance, a long-chain alkyl ethylene urea can be used.

The thickness of the surface layer can be selected from a range between, for instance, 1 µm and 25 µm. The build mat disclosed herein can be favorably made in an embodiment having a surface layer with such a thickness.

The build mat disclosed herein can be preferably used as a build mat that is placed on the build stage of a 3D printer (molding device) by FDM. In 3D printing on a build mat placed on the build stage, there is no need for removal from the build stage surface of a 3D print directly formed on the build stage by a scraper and the like. This can prevent damage to the print occurring during retrieval from the build stage. It may also be advantageous to print on the build mat placed on the build stage from the standpoint of protection and easy cleaning of the build stage.

### [Brief Description of Drawings]

Fig. 1 shows a cross-sectional diagram schematically illustrating the build mat according to an embodiment.
Fig. 2 shows a diagram illustrating usage of the build mat according to an embodiment.
Fig. 3 shows a diagram illustrating usage of the build mat according to an embodiment.
Fig. 4 shows a diagram illustrating usage of the build mat according to an embodiment.

### [Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of an actual product provided.

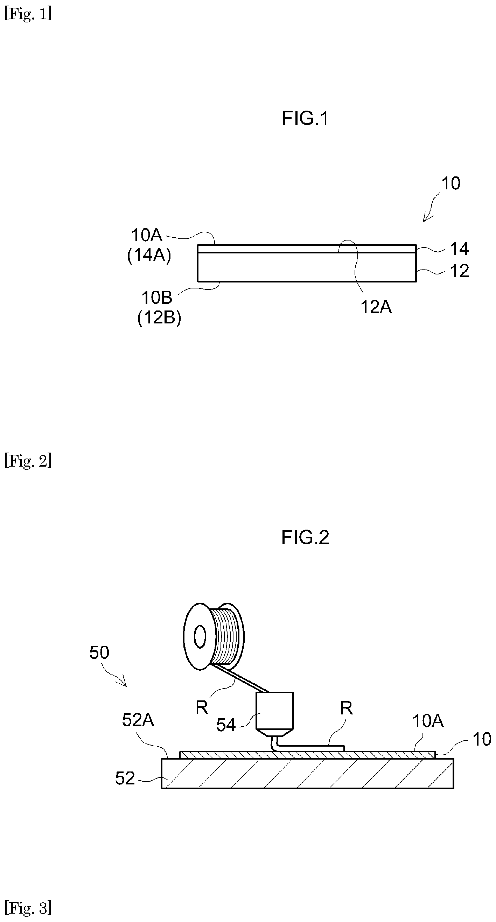

Fig. 1 shows a cross-sectional diagram of the build mat according to an embodiment disclosed herein. A build mat 10 in this embodiment is constituted as a laminate comprising a substrate 12 and a surface layer 14 provided to a first face 12A. With respect to surface layer 14, its surface 14A is exposed to the outside as a top face 10A of build mat 10 and an object is formed on surface 14A. In other words, surface 14A of surface layer 14 is used as a build surface. The second face 12B of substrate 12 may be exposed to the outside as a bottom face 10B of build mat 10 as in the example shown in Fig. 1. Alternatively, one, two or more layers may be laminated on second face 12B. Substrate 12 and surface layer 14 can individually have a monolayer structure or a multilayer structure with two or more layer. Build mat 10 can be in a flat sheet or in a roll of a long band wound in its length direction.

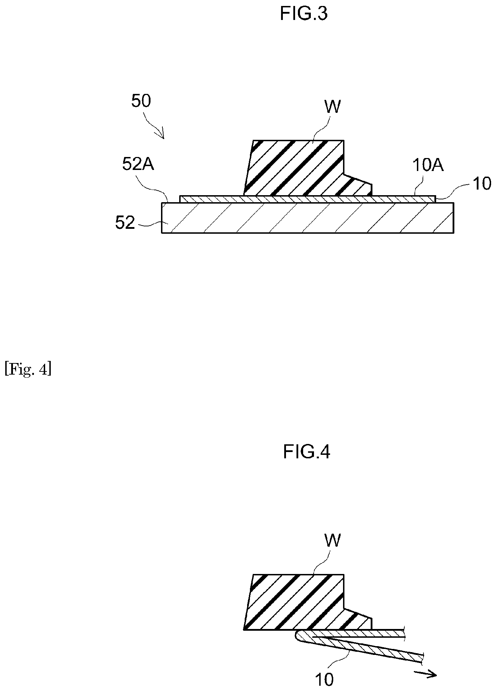

Typical usage of build mat 10 is described with reference to Fig. 2 to Fig. 4. Build mat 10 is first placed with its top face 10A up on a top face 52A of a build stage 52 of a 3D printer to form an object, for instance, an FDM 3D printer 50 (Fig. 2). In doing so, build mat 10 can be fixed to build stage 52 by an arbitrary means in order to prevent lifting and displacement of build mat 10 from build stage 52. When 3D printer 50 is in operation, melted 3D printing resin R is ejected from a nozzle 54 and allowed to stick to top face 10A of build mat 10. 3D printing resin R is ejected and layered in such a manner to gradually build an object W of interest on build mat 10 placed on build stage 52 (Fig. 3). When the 3D printing process is completed on build stage 52, build mat 10 is retrieved from build stage 52 along with an object W sticking to and having been formed on the build mat 10. Subsequently, the adhesion between object W and build mat 10 is resolved. In typical, by peeling build mat 10 from the bottom of object W, object W is separated from build mat 10 (Fig. 4).

The build mat disclosed herein adopts an embodiment having a surface layer on the first face of the substrate; when the surface of the surface layer is used as a build surface, good resin adhesion during object formation (3D printing) can be combined with easy object separation from the build mat. An embodiment of the build mat can be selected so that these features work favorably.

The build mat according to some favorable embodiments has a peel strength (PLA peel strength) of 1.5 N/18mm or greater, determined by the method described later in Examples. From the standpoint of obtaining better adhesion, the PLA peel strength is preferably 2.0 N/18mm or greater. It can be, for instance, 2.5 N/18mm or greater, or even 3.0 N/18mm or greater. The PLA peel strength can be, for instance, 15 N/18mm or less. From the standpoint of reducing the load applied to the printed object during its separation from the object, it is preferably 10 N/18mm or less, or even 8 N/18mm or less. From the standpoint of preventing the build mat from breaking and tearing during the object separation, in some embodiments, the PLA peel strength can be, for instance, 6 N/18mm or less, or even 5 N/18mm or less.

The build mat according to some favorable embodiments is constituted so that it leaves the surface layer on the PLA (surface) after the peel in the PLA peel strength measurement. By allowing it to peel away while leaving the surface layer, it can favorably combine resin adhesion during object formation and easy object separation.

The presence of the surface layer remaining on the PLA (surface) after the build mat is peeled away can be detected by the presence of absorption bands corresponding to components of the surface layer found in an IR spectrum obtained by ATR-FTIR analysis of the PLA surface after the peel (or an IR spectrum of the post-peel PLA surface, hereinafter). More specifically, it can be detected by the method described later in Examples.

The IR spectrum of the post-peel PLA surface may be free of absorption bands originating from PLA while showing absorption bands corresponding to the surface layer's components. This means that the PLA surface is mostly covered with the surface layer left thereon. Alternatively, the IR spectrum of the post-peel PLA surface may show absorption bands originating from PLA in addition to absorption bands corresponding to the surface layer's components. This means that the PLA (surface) is thinly or partially covered with the surface layer left thereon.

As long as the effect of the build mat disclosed herein is not significantly impaired, in addition to the surface layer of the build mat, the post-peel PLA surface may be left with part of the substrate material supporting the surface layer (e.g. some paper fibers from the build mat that has the surface layer on a paper substrate). When the substrate material is left in a large amount on the post-peel PLA surface in addition to the surface layer, the surface layer remaining on the PLA surface is mostly covered with the substrate. In such a case, the IR spectrum of the post-peel PLA surface shows absorption bands of the substrate material while lacking absorption bands of the surface layer. In the build mat disclosed herein, the substrate can be left along with the surface layer on the post-peel PLA surface, suitably in an amount to not excessively cover the surface layer left on the post-peel PLA surface. More specifically, it is preferably to a level where absorption bands of the surface layer can be detected in the IR spectrum of the post-peel PLA surface.

In the following, favorable embodiments of the build mat disclosed herein are described in further detail.

The material forming the build mat substrate is not particularly limited. For instance, a paper material, non-woven fabric and plastic film can be used. Examples of the paper material include Japanese paper (washi), crepe paper, Kraft paper, glassine paper and synthetic paper. Examples of the Japanese paper include pulp-blended paper comprising beaten wood pulp and the like as well as blended paper comprising synthetic staple in addition to the pulp. Examples of the synthetic staple material include rayon, polyamide, polyester, polyethylene, polypropylene, polyurethane, polyvinyl alcohol, polyvinyl chloride, polyvinylidene chloride and polyacrylonitrile.

Examples of the unwoven fabric material include pulp such as hemp pulp and wood pulp, rayon, acetate fibers, polyester fibers, polyamide fibers, polyolefin fibers and polyvinyl alcohol fibers.

Examples of the plastic film include polyolefin film, polyester film, polyimide-based resin film, polyamide-based resin film, vinyl chloride-based resin film and vinyl acetate-based resin film. Examples of the polyolefin film include polyethylene film, polypropylene film, and film formed of ethylene-propylene copolymer. Examples of the polyester film include polyethylene terephthalate film. A non-porous plastic film is preferable. For instance, a preferable plastic film has a porosity (a ratio of the void volume to the apparent volume at 25 °C) below 3 % by volume (typically below 1 % by volume).

The substrate can be formed of one kind of material or two or more kinds of material. For instance, the substrate can be a laminate formed of several layers varying in ingredients. The substrate may include, as necessary, various additives including filler (inorganic filler, organic filler, etc.), colorant such as pigment and dye, anti-aging agent, antioxidant, UV absorber, antistatic agent, slip agent, plasticizer, flame retardant and surfactant. The first face of the substrate may be subjected, as necessary, to a surface treatment for purposes such as adjustment of tightness of adhesion between the substrate and the surface layer, adjustment of the degree of impregnation of the surface layer into the substrate, etc. Examples of the surface treatment include physical treatments such as corona treatment and plasma treatment as well as chemical treatments such as undercoating (primer coating).

While no particular limitations are imposed, the substrate may have a thickness of, for instance, about 10 µm to 800 µm, about 20 µm to 500 µm, or even about 30 µm to 300 µm. The substrate may have a density of, for instance, about 0.1 g/cm³ to 0.8 g/cm³. The substrate's thickness is determined based on JIS P8118:1998. The substrate's grammage is determined based on JIS P8124:2011. The same measurement methods have been employed in Examples described later.

While no particular limitations are imposed, the substrate's first face (i.e. the surface on which the surface layer is formed) may have an Oken-type smoothness of, for instance, 150 seconds or less, 100 seconds or less, 50 seconds or less, or even 30 seconds or less. The Oken-type smoothness of the substrate's first face can be, for instance, 5 seconds or greater, or even 10 seconds or greater. The Oken-type smoothness is determined based on JIS P8155:2010, using an Oken-type smoothness tester.

In some embodiments of the build mat disclosed herein, a paper substrate (i.e. a substrate formed primarily of a paper material) can be preferably used as the substrate. Favorable examples of the paper substrate include Japanese paper and crepe paper. In particular, Japanese paper is preferable.

The paper substrate may have a thickness of, for instance, about 20 µm to 500 µm. From the standpoint of the ease of peeling the build mat from the resulting object, in some embodiments, the thickness of the paper substrate can be, for instance, 30 µm or greater, 45 µm or greater, or even 60 µm or greater. From the standpoint of facilitating temperature control of the top face (build surface) of the build mat and of preventing curling, in some embodiments, the thickness of the paper substrate can be, for instance, 200 µm or less, 160 µm or less, 130 µm or less, 100 µm or less, or even 85 µm or less.

The paper substrate may have a grammage of, for instance, 15 g/m² or greater. From the standpoint of the strength, it is usually preferably 20 g/m² or greater, 30 g/m² or greater, or even 35 g/m² or greater. From the standpoint of the flexibility, the grammage of the paper substrate can be, for instance, 150 g/m² or less, 100 g/m² or less, 75 g/m² or less, or even 60 g/m² or less.

The paper substrate may include a resin material, filler, colorant and so on that are generally used in the paper field. For instance, the paper substrate may be impregnated with a resin material such as natural rubber, isoprene rubber, styrene-butadiene rubber (SBR), acrylonitrile-butadiene rubber, acrylonitrile-butadiene-styrene (ABS) rubber, starch (e.g. cationized starch), viscose, and polyvinyl alcohol. The impregnation amount of the resin material is not particularly limited. For instance, it can be about 40 % to 60 % by weight of the entire paper substrate.

The surface layer of the build mat can be constituted so that it allows the resin used for forming an object to stick well during the object formation while it remains at least partially on the resulting object when the object is peeled in order to increase the ease of separating the object from the build mat.

In some embodiments, a fixing agent can be used as a component of the surface layer. The fixing agent can contribute to at least either an increase in PLA peel strength or an increase in tendency of the surface layer to remain on the post-peel PLA surface. For the fixing agent, solely one species or a combination of two or more species can be used.

The fixing agent is not particularly limited. For instance, a compound having a N-containing functional group can be used. Non-limiting examples of the N-containing functional group include an amide group, imide group, amino group, cyano group and isocyanate group. The N-containing functional group can be acyclic or cyclic. Non-limiting examples of the cyclic N-containing functional group include a lactam ring, oxazoline ring, imidazoline ring, and isocyanurate ring. One example of the fixing agent that can be preferably used in the surface layer of the build mat disclosed herein is a compound having an acyclic or cyclic amide group. The amide group may be in a form of urea structure (N-(C=O)-N) or urethane bond (N-(C=O)-O).

The fixing agent can also be a compound having a N-containing functional group as described above as well as a hydrophobic moiety per molecule. Examples of the hydrophobic moiety include a hydrocarbon group with 4 or more (preferably 8 or more, e.g. 10 or more) carbon atoms, a halogenated hydrocarbon group with 2 or more (preferably 4 or more) carbon atoms, and a silicone chain. The maximum number of carbon atoms in such a hydrocarbon group is not particularly limited. For instance, it can be 50 or fewer, or 40 or fewer. The halogen in the halogenated hydrocarbon group can be, for instance, fluorine or chlorine. Examples of the silicone chain include organopolysiloxane chains such as dimethylpolysiloxane. For instance, when the build mat is in a roll, a fixing agent having such a hydrophobic moiety may be useful in inhibiting excessive adhesion (blocking, strong adhesion, etc.) between inner and outer layers of the build mat and facilitating unwinding of the roll (increasing the ease of unwinding).

The fixing agent may be a polymer having a N-containing functional group as described above in a main chain or in a side chain. For instance, homopolymer or copolymer of an aforementioned compound can be used as the fixing agent.

In some embodiments, at least one species of compound selected from the group consisting of alkylethylene ureas and fatty acid amides can be preferably used as the fixing agent. Among them, alkylethylene ureas are preferable and a long-chain alkylethylene urea represented by the formula (1) below is particularly preferable.

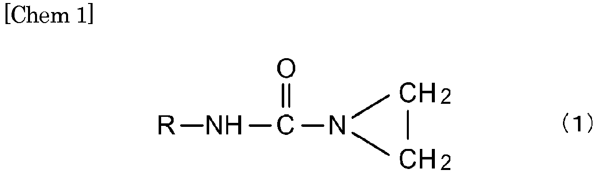

Here, the alkyl group represented by R in the formula (1) has 10 to 30 or preferably 14 to 26 carbon atoms in either a linear structure or a branched structure. Examples of the long-chain alkylethylene urea include tetradecylethylene urea, heptadecylethylene urea and octadecylethylene urea. An example of long-chain alkylethylene ureas that can be used preferably is octadecylethylene urea.

The amount of fixing agent used is not particularly limited. For instance, it can be 0.1 g or more per 1 m² of area of the surface layer (i.e. 0.1 g/m² or greater). From the standpoint of obtaining greater effect of its use, it can 0.3 g/m² or greater, 0.5 g/m² or greater, or even 1 g/m² or greater. The fixing agent can be used in a smaller amount from a cost-effective point of view and so on as long as the technical problems of the present invention can be solved. In some embodiments, the fixing agent can be used in an amount of, for instance, 20 g/m² or less, 15 g/m² or less, 10 g/m² or less, or even 5 g/m² or less. The build mat disclosed herein can be made in an embodiment where the surface layer is essentially free of a fixing agent. Here, "being essentially free" means that it is not included intentionally at least.

In some embodiments, the surface layer may be essentially formed of one, two or more species of fixing agent. For instance, the ratio of fixing agent in the surface layer can be 99 % by weight or higher, or it can be even 100 % by weight. In other embodiments, the surface layer may comprise other components in addition to the fixing agent. In this case, the ratio of fixing agent in the entire surface layer can be, for instance, 1 % by weigh or higher, 5 % by weight or higher, 10 % by weight or higher; and it can be, for instance, 75 % by weight or lower, 50 % by weight or lower, or even 30 % by weight or lower. In yet other embodiments, the ratio of fixing agent in the entire surface layer can be, for instance, below 5 % by weight, below 1 % by weight, or essentially 0 % by weight.

The surface layer of the build mat disclosed herein may include a resin. The use of resin can improve the shape retention of the surface layer, facilitating the build mat to peel in a manner leaving the surface layer on the post-peel PLA surface. While no particular limitations are imposed, examples of the resin that can be used as a component of the surface layer include acrylic resin, vinyl acetate-based resin, polyurethane, polyamide, melamine resin, styrene-butadiene rubber (SBR), natural rubber and polyester. Among these resins, solely one species or a combination (typically a blend) of two or more species can be used. Examples of resins that can be used preferably include acrylic resin, vinyl acetate resin and natural rubber. When the substrate is a paper substrate (e.g. Japanese paper or crepe paper), a material known as a paper filler can be used as the resin for the surface layer.

The resin can be the same as the 3D printing material. It may include, as the resin, one, two or more species selected among, for instance, PLA, ABS resin, acrylonitrile-styrene acrylate (ASA) resin, polycarbonate (PC), PS-ABS resin, polyether imide resin (e.g. ULTEM® available from SABIC Innovative Plastics, etc.), nylon (e.g. nylon 12, nylon 6, etc.), polybutylene terephthalate, acrylic resin (e.g. methyl acrylate resin), polyacetal, polyvinyl chloride and the like.

In some embodiments of the build mat disclosed herein, the surface layer of the build mat may comprise the fixing agent and the resin together. In such a case, the resin component may work as a binder resin for the fixing agent. In such a surface layer, the amount of fixing agent used to 100 parts by weight of binder resin can be, for instance, 1 part by weight or greater, 5 parts by weight or greater, or even 10 parts by weight or greater. The amount of fixing agent used to 100 parts by weight of binder resin can be, for instance, 100 parts by weight or less, 70 parts by weight or less, 50 parts by weight or less, or even 30 parts by weight or less.

The surface layer may include, as necessary, inorganic particles such as silica particles and titanium oxide particles. For purposes such as facilitation of unwinding, the surface layer material may include a release agent. As the release agent, it is possible to use release agents such as known silicone-based, long-chain alkyl, fluorine-based kinds and molybdenum sulfide. Examples of other components possibly included in the surface layer as necessary include various known additives such as colorant including pigment and dye, plasticizer, softener, antistatic agent, anti-aging agent, UV absorber, antioxidant, and photo-stabilizer.

The surface layer is not particularly limited in thickness as long as it has a thickness that can bring about both adhesion and easy separation. The surface layer can have a thickness of, for instance, about 0.5 µm to 100 µm. From the standpoint of obtaining greater effect of the surface layer, in some embodiment, the thickness of the surface layer can be, for instance, 1µm or greater, 3 µm or greater, 5 µm or greater, or even 7 µm or greater. From the standpoint of the flexibility of the build mat and shape retention of the surface layer, the surface layer's thickness can be, for instance, 50 µm or less, 25 µm or less, or even 15 µm or less. The thickness of the surface layer can be determined by scanning electron microscopy (SEM) analysis of a cross section of the build mat.

The build mat in the art disclosed herein may have a PSA layer on the substrate's second face, opposite of the face to which the surface layer is provided. The build mat in such an embodiment can be easily fixed by adhesion to a build stage by press-bonding the PSA layer exposed on the bottom of the build mat to the build stage. The build mat adhered with PSA to the build stage can be retrieved from the build stage by pulling and peeling the build mat from the build stage after completion of the molding (printing) process. The PSA layer may be provided entirely or partially to the second face of the substrate.

In some embodiments, the second face of the build mat can have a PSA layer in areas corresponding to two edges in the X or Y direction of the build stage or the second face can have a PSA layer looping around the circumference of the build mat while being non-adhesive with no PSA layer in the central area of the build mat. According to an embodiment where the build mat does not adhere to the build stage in an area to be underneath a printed object (i.e. the build area), the build mat can be removed from the build stage by peeling the PSA layer at the two edges or circumference of the build mat; and therefore, the load applied to the object can be reduced. Alternatively, the object and the build mat sticking to the object can be retrieved from the build stage by cutting apart the build mat between the area having the PSA layer and the area where the object is formed.

The PSA forming the PSA layer is not particularly limited. It can be selected among, for instance, an acrylic PSA, rubber-based PSA, polyester-based PSA, polyurethane-based PSA and silicone-based PSA. Here, the acrylic PSA refers to a PSA that comprises an acrylic polymer as the base polymer. The same applies to the rubber-based PSA and other PSA. The "base polymer" of a PSA refers to the primary component (typically a component accounting for more than 50 % by weight) among the polymers in the PSA.

As the acrylic polymer, for example, a polymer of a monomeric starting material comprising an alkyl (meth)acrylate as the primary monomer and possibly comprising a secondary monomer copolymerizable with the primary monomer is preferable. The primary monomer herein refers to a component that accounts for higher than 50 % by weight of the monomer composition in the monomeric starting material.

As the alkyl (meth)acrylate, it is favorable to use an alkyl (meth)acrylate having an alkyl group with 1 to 20 carbon atoms at its ester terminus, that is, a C₁₋₂₀ alkyl (meth)acrylate. From the standpoint of the storage elastic modulus of PSA, a C₁₋₁₄ alkyl (meth)acrylate is preferable and a C₁₋₁₀ alkyl (meth)acrylate is more preferable. Particularly preferable alkyl (meth)acrylates include n-butyl acrylate (BA) and 2-ethylhexyl acrylate (2EHA). When the starting monomer mixture includes at least BA or 2EHA, the total amount of BA and 2EHA can be, for instance, 75 % by weight or more, 90 % by weight or more, or even 95 % by weight or more of the starting monomers. The art disclosed herein can be practiced in an embodiment where the starting monomer mixture consists of BA, of 2EHA, or of BA and 2EHA as the alkyl (meth)acrylate.

The secondary monomer copolymerizable with the alkyl (meth)acrylate may be useful for introducing crosslinking points in the acrylic polymer or increasing the cohesive strength of the acrylic polymer. For example, one, two or more species can be selected and used among monomers containing functional groups such as carboxy group, hydroxy group, acid anhydride group, amide group, amino group, keto group, N-containing ring, alkoxysilyl group, imide group and epoxy group. Among these, carboxy group-containing monomers, hydroxy group-containing monomers and cyano group-containing monomers are preferable. Carboxy group-containing monomers are more preferable. Favorable examples of carboxy group-containing monomers include acrylic acid and methacrylic acid. Favorable examples of hydroxy group-containing monomers include 2-hydroxyethyl acrylate and 4-hydroxybutyl acrylate. Examples of cyano group-containing monomers include acrylonitrile and methacrylonitrile.

When a functional group-containing monomer is copolymerized in the acrylic polymer, the ratio of functional group-containing monomer to all monomers constituting the acrylic polymer is not particularly limited. Usually, from the standpoint of combining cohesive strength and adhesiveness at a good balance, the ratio of functional group-containing monomer is preferably about 0.1 % to 40 % by weight (e.g. 0.5 % to 30 % by weight, typically 1 % to 20 % by weight). When a carboxy group-containing monomer is copolymerized, from the standpoint of the cohesion, etc., the ratio of carboxy group-containing monomer to all the monomers is preferably 0.1 % to 20 % by weight (e.g. 0.5 % to 10 % by weight, typically 0.5 % to 5 % by weight).

For purposes such as increasing the cohesive strength of the acrylic polymer, other co-monomer(s) besides the aforementioned secondary monomers can be used. Examples of such co-monomers include vinyl ester-based monomers such as vinyl acetate and vinyl propionate; aromatic vinyl compounds such as styrene, α-methylstyrene and vinyl toluene; cycloalkyl (meth)acrylates such as cyclohexyl (meth)acrylate, cyclopentyl (meth)acrylate and isobornyl (meth)acrylate; aromatic ring-containing (meth)acrylates such as phenyl (meth)acrylate and benzyl (meth)acrylate); olefinic monomers such as ethylene, propylene, isoprene, butadiene, isobutylene, etc.; chlorine-containing monomers such as vinyl chloride, vinylidene chloride, etc.; isocyanate group-containing monomers such as 2-(meth)acryloyloxyethyl isocyanate, etc.; alkoxy group-containing monomers such as methoxyethyl (meth)acrylate, ethoxyethyl (meth)acrylate, etc.; vinyl ether-based monomers such as methyl vinyl ether, ethyl vinyl ether, etc.; and the like. The amount of such other co-monomer(s) can be suitably selected according to the purpose and intended use, and thus is not particularly limited. For instance, it is preferably 10 % by weight or less of all the monomers.

In the PSA layer, a crosslinking agent may be used. As the crosslinking agent, one, two or more species can be used among, for instance, epoxy-based crosslinking agents, isocyanate-based crosslinking agents, oxazoline-based crosslinking agents, and carbodiimide-based crosslinking agents. Favorable examples include epoxy-based crosslinking agents and isocyanate-based crosslinking agents. These can be used together. The amount of crosslinking agent used is not particularly limited. For instance, it can be selected from a range between 0.001 part and 10 parts by weight to 100 parts by weight of the base polymer. It can be used in an amount of 0.001 part to 2 parts by weight, or even 0.001 part to 0.5 parts by weight. Alternatively, a crosslinking agent may not be used.

As the tackifier, a known tackifier resin usable in PSA can be used. Examples include rosin-based resins, rosin derivative resins, petroleum-based resins, terpene-based resins, phenolic resins and ketone-based resins. These can be used solely as one species or in a combination of two or more species. The amount of tackifier resin used is not particularly limited. The amount of tackifier resin used to 100 parts by weight of the base polymer can be, for instance, 1 part by weight or greater, 5 parts by weight or greater, 10 parts by weight or greater; and it can be, for instance, 50 parts by weight or less, 30 parts by weight or less, or even 20 parts by weight or less. Alternatively, a tackifier resin may not be used.

The PSA layer may comprise, as necessary, various additives generally used in the field of PSA, such as a leveling agent, crosslinking-accelerating agent, plasticizer, softening agent, filler, anti-static agent, anti-aging agent, UV-absorbing agent, antioxidant and photo-stabilizing agent.

The thickness of the PSA layer can be selected so as to obtain necessary bonding properties. The PSA layer may have a thickness of, for instance, 3 µm or greater, 5 µm or greater, 10 µm or greater, or even 20 µm or greater. From the standpoint of easily preventing leftover adhesive residue during separation of the build mat, the PSA layer's thickness can be, for instance, 100 µm or less, 70 µm or less, or even 50 µm or less. The PSA layer may have a monolayer structure consisting of a single layer or a multilayer structure comprising two or more layers.

The method for fastening the build mat is not limited to adhesion of the PSA layer provided on the second face of the build mat to the build stage. Examples of other methods for fastening the build mat to a build stage include methods using the likes of vacuum adhesion (suction) and static adhesion, methods using jigs such as clips and frames, and methods using a separate PSA tape besides the build mat to adhere the periphery of the build mat to the build stage. These methods can be suitably combined.

On the second face of the substrate, a backside layer different from the PSA layer may be formed. Such a backside layer can be, for instance, an undercoat layer (primer layer) placed between the substrate's second face and the PSA layer to enhance the anchoring (tightness of adhesion) of the PSA layer to the substrate. In an embodiment either having or lacking the PSA layer, the backside layer may be a layer to adjust the physical properties (strength, air permeability, etc.) of the build mat. Such a backside layer can be formed, using a known resin, for instance, an acrylic resin, rubber-based polymer, urethane-based polymer, and epoxy-based resin. The backside layer can be a layer to provide releasing properties to the second face of the substrate. A releasable backside layer can be formed, using a known release agent, for instance, silicone-based, long-chain alkyl, fluorine-based kinds and molybdenum sulfide. The thickness of the backside layer is not particularly limited. It can be, for instance, 0.1 µm or greater, 0.5 µm or greater, 1µm or greater, 5 µm or greater, 10 µm or greater, or even 20 µm or greater. From the standpoint of reducing the overall thickness of the build mat, the backside layer may have a thickness of, for instance, 100 µm or less, 70 µm or less, 50 µm or less, or even 30 µm or less.

The thickness of the build mat disclosed herein is not particularly limited. The build mat may have a total thickness of, for instance, 1 mm or less, 750 µm or less, or even 500 µm or less. In some embodiments, from the standpoint of the ease of controlling the temperature of the top face (build surface) of the build mat, the build mat may have a thickness of, for instance, 300 µm or less, 200 µm or less, or even 150 µm or less. From the standpoint of the ease of peeling objects from the build mat, in some embodiments, the thickness of the build mat can be, for instance, 20 µm or greater, 30 µm or greater, or even 50 µm or greater.

The build mat disclosed herein can be applied to object formation on the surface layer. For instance, it is suited for object formation by FDM. It is particularly preferable to use the build mat disclosed herein in an embodiment where it is placed on the build stage of an FDM 3D printer with the surface layer facing upward (being the build surface). The resin (3D printing resin) used in the object formation is not particularly limited. For instance, it can be one, two or more species selected among PLA, ABS resin, ASA resin, PC, PS-ABS resin, polyether imide resin (e.g. ULTEM® available from SABIC Innovative Plastics, etc.), nylon (e.g. nylon 12, nylon 6, etc.), polybutylene terephthalate, acrylic resin (e.g. methyl acrylate resin), polyacetal, polyvinyl chloride and the like. It is especially preferable to use the build mat disclosed herein for FDM 3D printing where PLA or ABS resin is used as the 3D printing resin.

### [EXAMPLES]

Several worked examples relating to the present invention are described below, but the present invention is not intended to be limited to these examples. In the description below, "parts" and "%" are by weight unless otherwise specified.

### < Preparation of build mat>

### (Example 1)

To the first face of Japanese paper with a thickness of 72 ± 5 µm and a grammage of 43 g/m² (available from Nippon Paper Papylia Co., Ltd.; "substrate B1" hereinafter), was applied an aqueous dispersion U1 comprising methyl methacrylate-modified natural rubber latex (40 parts of methyl methacrylate to 100 parts of natural rubber) as the primary component and allowed to dry at 120 °C for two minutes to form a backside layer with a thickness of about 10 µm. The Japanese paper had a tear strength of about 0.95 N based on JIS P8116:2000 and tensile strength of about 45 N/15mm in MD (in the machine direction of the paper machine) and about 12 N/15mm in the direction vertical to MD based on JIS P8113:2006.

To the second face (i.e. on the opposite side of the face on which the backside layer was formed), was applied an aqueous dispersion S1 comprising a vinyl acetate-based polymer and octadecylethylene urea (OCTEX EM available from Hodogaya Chemical Co., Ltd.) at 100:15 by weight of solids and allowed to dry at 120 °C for two minutes to form a surface layer with a thickness of about 10 µm. With respect to the substrate B1, the surface to which the aqueous dispersion S1 was to be applied (i.e. on the side provided with the surface layer) had a smoothness of about 15 seconds, determined by an Oken-type smoothness tester based on JIS P8155:2010.

Subsequently, a PSA layer was formed on the backside layer as described later to obtain a build mat according to this Example.

### (Example 2)

In place of the substrate B1 in the preparation of the build mat according to Example 1, was used Japanese paper with a thickness of 70 ± 5 µm and a grammage of 41 g/m² (available from Nippon Paper Papylia Co., Ltd.). The Japanese paper had a tear strength of about 0.84 N based on JIS P8116:2000 and tensile strength of about 35 N/15mm in MD (in the machine direction of the paper machine) and about 12 N/15mm in the direction vertical to MD based on JIS P8113:2006. In addition, in place of the aqueous dispersion S1, was used an aqueous dispersion S2 comprising an acrylic polymer formed from an acrylic acid ester as the primary monomer and octadecylethylene urea (OCTEX EM available from Hodogaya Chemical Co., Ltd.) at a ratio of 100:15 by weight of solids. Otherwise in the same manner as Example 1, was obtained a build mat according to this Example. With respect to the Japanese paper, the surface to which the aqueous dispersion S2 was to be applied (i.e. on the side where the surface layer was formed) had a smoothness of about 20 seconds, determined by an Oken-type smoothness tester based on JIS P8155:2010.

### (Example 3)

In place of the substrate B1 in the preparation of the build mat according to Example 1, was used crepe paper with a thickness of 70 ± 5 µm. In addition, in place of the aqueous dispersion S1, was used an aqueous dispersion S3 of acrylic polymer formed from an acrylic acid ester as the primary monomer. Otherwise in the same manner as Example 1, was obtained a build mat according to this Example.

### (Example 4)

In the preparation of the build mat according to Example 1, no surface layer was formed on the second face of the substrate B1. Otherwise in the same manner as Example 1, was obtained a build mat according to this Example.

The PSA layers of the build mats according to Examples 1 to 4 were prepared as follows: In particular, a monomer mixture containing 2-ethylhexyl acrylate, methyl methacrylate and acrylic acid at a ratio of 93/5/2 by weight was subjected to emulsion polymerization to obtain an aqueous dispersion of acrylic polymer. To the aqueous dispersion, was admixed 0.08 part (based on solid content) of epoxy-based crosslinking agent (TETRAD-C available from Mitsubishi Gas Chemical Company, Inc.) to 100 parts (based on solid content) of the acrylic polymer in the aqueous dispersion to prepare a water-dispersed PSA composition. The composition was applied over the backside layer and allowed to dry at 130 °C for two minutes to form a 25 µm thick acrylic PSA layer.

### <Measurement and Evaluation>

### (PLA peel strength)

The build mat according to each Example was fixed onto the build stage of an FDM 3D printer. At the center of the build mat, was printed a PLA plate (test piece) 18 mm wide, 100 mm long and 2 mm thick under the conditions shown below. From the build stage, the resulting test piece was retrieved along with the build mat. For the convenience of measurement, of the build mat, length-wise extra margins outside the test piece were trimmed to about 6 mm from the test piece. Baby powder was dusted over the adhesive face of the build mat to make it non-adhesive. The test piece was then set in a universal tensile tester. By holding one end of the build mat hanging off at one end of the length direction (one width-wise end), the PLA peel strength was determined under the conditions shown below. The measurement was carried out three times and their average value was determined. The results are shown in Table 1.

It is noted that the adhesive face of the build mat was covered with a release liner over an area about 60 mm wide and about 15 mm long that included where the test piece was printed; while keeping this state, the build mat according to each Example was fixed to the build stage by applying the adhesive surface around this area to the build stage. This was to reduce the load applied to the joint between the build mat and the test piece during the retrieval of the build mat from the build stage so as to increase the precision of peel strength measurement. As the release liner, was used an about 90 µm thick sheet in which a paper substrate sheet having a face coated with a release layer formed of a release agent. With respect to the build mat according to Example 4, the PLA ejected from the nozzle did not stick to the build mat and further printing was not carried out.

### [Printing conditions]

- FDM 3D printer
   Device: BS01+ available from Bonsai Lab, Inc.
   Nozzle diameter: 0.4 mm
   nozzle temperature: 220 °C
   Build stage temperature: 50 °C
   Print speed: 40 mm/sec to 60 mm/sec
   Layer pitch: 0.2 mm (first layer pitch: 0.3 mm)
   Clearance (distance between nozzle tip and build mat's top face): ∼0.15mm
- 3D data
   Printing software: Repetier-Host V1.5.4
   3D data design: AutoDesk123 Design V1.7.5
   3D data format: STL
- Model material
   Polylactic acid filament (PolyPlus available from Polymaker, cross-sectional diameter ø1.75 mm, natural color type)

### [PLA peel test conditions]

Tensile tester: TENSILONE-type peel tester CM-1kNB available from Tamsui Corporation
Load cell: 50N
Tensile speed: 300 mm/min
Peel angle: 180°
Measurement environment: 23 °C, 50 % RH

### (Analysis of post-peel test piece surface)

Whether or not the surface layer of the build mat remained on the test piece after the peel strength measurement was determined by ATR-FTIR. The analysis was conducted on the surface (of the test piece, i.e. PLA) exposed in the peel test by pressing this surface against the Ge crystal under the conditions shown below.

### [Analytical conditions]

Analyzer: Nicolet 8700 (Thermo Fisher Scientific) and Silver Gate (Specac, Ltd.)
Analytical method: Single reflection ATR
Internal reflection element: Ge crystal (Ge pressor size ø 8 mm)
Detector: DTGS
Resolution: 4 cm⁻¹
Number of runs: 64

With respect to the surface layers of the build mats according to the respective Examples and the particular PLA used as a representative material, FT-IR analysis was conducted on their surfaces in the same manner as for the post-peel test piece surface. These IR spectra were compared to determine the presence of the surface layer left on the post-peel PLA surface.

The IR spectrum of the test piece surface after removal of the build mat according to Example 1 well matched the IR spectrum of the surface layer, lacking absorption bands around 1754.0 cm⁻¹, 1184.1 cm⁻¹ or 1088.3 cm⁻¹ characteristic of PLA while showing absorption bands (1735.2 cm⁻¹, 1117.7 cm⁻¹, 946.8cm⁻¹) characteristic of the surface layer of Example 1, but absent from PLA. This indicates that the post-peel test piece surface was mostly covered with the surface layer of the build mat according to Example 1.

The IR spectrum of the test piece surface after removal of the build mat according to Example 2 also well matched the IR spectrum of the surface layer, lacking absorption bands characteristic of PLA while showing an absorption band (1729.8 cm⁻¹) characteristic of the surface layer of Example 2, but absent from PLA. This indicates that the post-peel test piece surface was mostly covered with the surface layer of the build mat according to Example 2.

On the other hand, the IR spectrum of the test piece surface after removal of the build mat according to Example 3 clearly showed the absorption bands characteristic of PLA, but lacked absorption bands that are characteristic of the surface layer of Example 3 (1729.3 cm⁻¹, 1169.6cm⁻¹ and 1159.8cm⁻¹), but are absent from PLA. In other words, the presence of remaining surface layer was not found on the test piece surface after removal of the build mat according to Example 3.

### (Suitability for 3D printing)

The 3D printing suitability of the build mat according to each Example was evaluated in view of how well a resin material sticks to the build mat during object formation (during 3D printing) and how easily the build mat separates from the resulting object after printed. The results are shown in Table 1.

### [Table 1]

**Table 1**

| | | EX. 1 | EX. 2 | EX. 3 | EX. 4 |
|---|---|---|---|---|---|
| PLA peel strength (N/18mm) | | 3.8 | 2.5 | 1.4 | N/A |
| Remaining surface layer | | Present | Present | Absent | - |
| 3D printing suitability | Sticking properties | Sufficient | Sufficient | Insufficient | Not sticking |
| | Ease of separation | Good | Good | Good | - |

As shown in Table 1, the build mats according to Examples 1 and 2 favorably brought about both sticking properties during 3D printing and easy separation of the resulting object. On the other hand, the build mat according to Example 3 had poor sticking properties, resulting in lifting of the test piece printed on the build mat at the two ends of the length direction due to warping of the test piece caused by thermal contraction. As noted above, printing was not possible on the build mat of Example 4.

Although specific embodiments of the present invention have been described in detail above, these are merely for illustrations and do not limit the scope of claims. The art according to the claims includes various modifications and changes made to the specific embodiments illustrated above.

### [Reference Signs List]

- 10: build mat
- 10A: top face
- 10B: bottom face
- 12: substrate
- 12A: first face
- 12B: second face
- 14: surface layer
- 14A: surface
- 50 3D: printer
- 52: build stage
- 54: nozzle
- R 3D: printing resin
- W: resulting object (printed object)

## Claims

1. A build mat comprising a substrate and a surface layer provided on a first face of the substrate,
the build mat having a peel strength of 1.5 N/18mm or greater and 10 N/18mm or less, determined by peeling the build mat from polylactic acid placed on the surface layer; and
being constituted so that the surface layer remains on the polylactic acid in the peel strength measurement.

2. The build mat according to Claim 1, wherein the substrate is a paper substrate.

3. The build mat according to Claim 1 or 2, wherein the surface layer comprises a fixing agent having an amide group.

4. The build mat according to Claim 3, comprising a long-chain alkylethylene urea as the fixing agent.

5. The build mat according to any one of Claims 1 to 3, wherein the surface layer has a thickness of 1 µm to 25 µm.

6. The build mat according to any one of Claims 1 to 4, placed and used on a build stage of a 3D printer by fused deposition modeling.
